Europäisches Patentamt

(19) European Patent Office

Office européen des brevets

(11) Publication number: **0 447 158 A2**

(12) **EUROPEAN PATENT APPLICATION**

(21) Application number: **91302014.5**

(22) Date of filing: **11.03.91**

(51) Int. Cl.⁵: **G01N 27/62**

(30) Priority: **13.03.90 CA 2012030**

(43) Date of publication of application:
**18.09.91 Bulletin 91/38**

(84) Designated Contracting States:
**DE ES FR GB IT**

(71) Applicant: **HER MAJESTY THE QUEEN IN RIGHT OF CANADA AS REPRESENTED BY THE MINISTER OF REVENUE**
**Mckenzie Avenue**
**Ottawa, Ontario K1A 0L5 (CA)**

(72) Inventor: **Danylewych - May, Ludmila L.**
**36 Hounslow Avenue**
**North York Ontario M2N 2A8 (CA)**

(74) Representative: **Jones, Stephen Anthony et al**
**E. N. Lewis & Taylor 144 New Walk**
**Leicester LE1 7JA (GB)**

(54) **Detector for concealed explosive or narcotic substances.**

(57) An apparatus for detecting concealed explosive or narcotic substances using an ion mobility spectrometer (IMS) to analyze trace samples of those substances obtained by collecting adhering particles of dust from surfaces adjacent containers which may contain those concealed substances or from clothing of people that may be carrying them. The dust particles are capable, over a period of time, of adsorbing vapours emitted by concealed explosive or narcotic material in a container. Plastic explosives have very low vapour pressures but may, through mechanical abrasion and handling, distribute solid microscopic particles of that material around. The dust particles and microscopic particles can be collected by an air stream with an inertial collector and deposited onto a collecting medium, which is on a moveable surface, is then moved to another position adjacent the entrance to an ion mobility spectrometer where there are means to heat the particles to a temperature which will vaporize materials from the particles into the ion mobility spectrometer. That movable surface is provided with a number of collecting mediums for the particles so that as one is moved adjacent to the spectrometer, another collecting medium is moved beneath the base of the collector allowing collection and desorption to take place simultaneously.

EP 0 447 158 A2

Jouve, 18, rue Saint-Denis, 75001 PARIS

FIG. 3

# DETECTOR FOR CONCEALED EXPLOSIVE OR NARCOTIC SUBSTANCES

The invention is related to an apparatus for detection of concealed explosive or narcotic substances using an ion mobility spectrometer (IMS) to analyze trace amounts of explosive or narcotic material and in particular to units to collect and transport samples of material to the IMS detector where the samples are heated to vaporize those substances and introduce the vapours into the inlet of the IMS.

With the threats of international terrorism, particularly with regard to airport security, there is a strong requirement to provide a means to detect concealed explosives as well as narcotic substances. This problem has resulted in on-going research and development since the early 1960's with much of the attention at that time being directed to the detection of nitroglycerine dynamites because of their commercial availability. However, the degree of sophistication of international terrorism has increased and resulted in the use of new explosives such as EGDN, C-4, watergel/slurry/emulsions, plastic explosives, etc., as well as TNT and DNT. Many of these explosives have low vapour pressures and attempts have been made to detect vapours emitted by these materials and in particular concealed explosives in suitcases, baggage etc., which are handled at airports and other transportation facilities.

U.S. Patents 3,759,617 and 3,768,302 by Anthony Barringer describe a method and apparatus for collecting and concentrating atmospheric particulates and a means for analyzing vapours liberated from the particulates. Both these patents are directed to mineral exploration and geochemical surveying. However, U.S. Patent 3,759,617 states in lines 25 to 27 of column 6 "that the invention may also be applicable to other remote sensing applications such as the detection of narcotics and explosives". In addition, U.S. Patent 3,768,302 states in lines 59 to 64 of column 6 that "the present invention can be used to sample large volumes of air from aircraft cabins, baggage holds, customs areas, holds of ships and the like". This patent then goes on to state that "the particles in the atmosphere act as scavengers for traces of narcotic vapours which are concentrated and liberated for analysis."

U.S. Patents 4,580,440 and 4,718,268 by Neil M. Reid et al also describes a method of detecting contraband substances in freight cargo containers using a mass spectrometer as an analyzer. These patents mention that many contraband substances such as drugs or explosives have low vapour pressures and emit particulates and vapours even when wrapped and these can then settle on or agglomerate with dust or other particulates located in the containers. Furthermore, the vapours emitted from contraband are adsorbed over a period of time by non-contraband particles in the container providing a concentration effect. Then by agitating the container, the particulates can become airborne and collected if the air in these large containers is sampled. The collection of the samples from the air may be done using a conventional cyclone or a rolled coil of wire mesh where an air stream to be sampled enters the centre of the coil and travels radially outward, the particulates being collected on the surfaces of the wire mesh coil. The wire mesh coil is coated with an appropriate sticky substance such as a light oil to aid in the collection of the particulates on its surfaces. This results in a very large concentration effect because particulates in the container may have had a long time to absorb volatile vapours from contraband material.

The coil, after it has collected the particulates from the air stream, is connected to an analyzer and U.S. Patents 4,580,440 and 4,718,268 suggest using a mass spectrometer. At the analyzer, the coil is heated by either a heated carrier gas stream or induction heater to rapidly release vapours adsorbed by the particulates, which vapours are carried over a short period of time into the analyzer. These released vapours are then analyzed in the mass spectrometer in order to detect any contraband such as explosives (TNT, RDX, PETN, etc.) or drugs (cocaine, heroin, etc.) which may have been concealed in that container. Since the volume of vapour released into the analyzer is much smaller than the volume of air collected, a large concentration effect is achieved.

U.S. Patent 3,128,619 illustrates an apparatus for monitoring a flowing fluid stream such as eluents from a liquid chromatographic column where a portion of the stream is drawn off and deposited onto a moving tape which is fed from a supply reel to a remote take-up reel. The tape is moved forward so that the portion of the stream deposited on the tape is placed in a low temperature (40°C to 140°C) chamber to vaporize carrier fluid, leaving only residual components of the stream portion on the tape. The tape is moved forward so that these residual components are carried into a high temperature (140°C to 600°C) chamber so as to volatilize or pyrolize at least part of the residue on the tape. The gasified residue is then transported to an analyzer such as a mass detector by a pick-up gas such as a flow of argon or helium.

U.S. Patent 3,788,479 illustrates another apparatus to test eluent wherein an applicator applies a sample onto a rotary porous alumina disc which acts as a conveyer for the sample. The disc is rotated to place that sample into a eluent heater and exhaust assembly where the eluent is flash evaporated leaving only the sample on the disc. The disc is further rotated to place that sample into a flame ionization detector provided with dual nozzles for uniform heating of the disc conveyer. The disc is then further rotated to place any residues left of the sample into an oxidizer where the disc conveyor is burned clean of any residues left after passing through the detection device. The disc is still further rotated to place that section which had been cleaned into a disc cooler assembly to eliminate residual heat in the conveyor so that section of the disc is again ready to receive another sample from the applicator.

U.S. Patent 4,055,987 discloses yet another system for transporting effluent from a liquid chromatograph to an ionization chamber of a mass spectrometer. The effluent is applied to a thin metallic ribbon which is in the form of a loop or belt and is driven by a drive wheel past a heater to evaporate any solvent. The residue on the ribbon is then transported through vacumu locks to a flash vaporization chamber which provides for a rapid volatilization of the residue into the mass spectrometer. This U.-S. Patent along with U.S. Patents 3,128,619 and 3,788,479 all deal with systems for carrying liquid samples to an analyzer, the samples being dried before entering the analyzer.

An apparatus which is particularly useful to detect trace quantities of chemical molecules is an ion mobility detector. These detectors operate generally at atmospheric pressure and are of a size which can be incorporated into a portable apparatus. Several types of ion mobility detectors are described in U.S. Patents 4,311,669 and 4,551,624 by Glenn E. Spangler. These patents illustrate the principle of operation of the detectors. The ion mobility detectors described by Glenn E. Spangler have a reaction chamber and drift chamber with an ionization source being located in the reaction chamber. An ion injector grid separates the reaction and drift chambers, the drift chamber having a collector electrode at its other end. In operation a carrier gas is used to carry vapour of a material to be analyzed into the ion mobility detector tube. These types of detectors are capable of detecting extremely small amounts of chemical molecules by measuring the time of transport of ions of the molecules from the ion injecting grid to the collector electrode. The ion injector grid is periodically biased with a short pulse to transmit a bundle of ions into the drift chamber. The time between that short pulse and the time it takes different ions in that bundle to reach the collector can be measured and, since the mobility of ions is dependent on their type, the type of ions in the bundle are easily identified.

Conventional teaching on ion mobility spectrometers is that the interior of the device should be kept sealed, to prevent contamination from the exterior. This is achieved in known devices by means of a membrane. Much work has been carried out to improve the efficiency of the membranes in allowing transport of substances of interest. However, all membranes still provide inefficient transport, which is clearly a disadvantage in trying to detect trace or very low levels of narcotics, explosives, etc. Conventional teaching has also been that a specific carrier gas, and reagent gas if neczssary, are required within the IMS device.

The inventor is aware of at least one proposal where a substance to be analyzed is passed directly into the inlet of an IMS analyzer. However, in this arrangement, a sample is first collected, condensed and preconcentrated. It is then re-evaporated into the IMS analyzer inlet, so that the device does not operate in real time. Problems with this arrangement have been found. Principally, it has not been realized that it is important to keep the inlet and interior of the IMS analyzer clean. If the substance of interest accumulates at an inlet mesh or the like, then this can cause polymeric substances to start breaking down.

Accordingly, it is desirable to provide a detector for narcotics, explosives and other substances which may only be present in trace amounts, which detector has an input arrangement capable of generating vapour from particles of the substances. Further, the detector should be capable of entraining the vapours into a gas flow, which may be ambient air, while ensuring that the particles themselves are not carried into the interior of the detector.

It is an object of the invention to provide an apparatus with an improved means of detecting concealed explosives or narcotic substances which is based on the principle that trace quantities of volatile material and particulates emanating from the concealed explosive material will be adsorbed on the surfaces of loosely adhering particles of dust which are present on clothing, packages, luggage or carry-on baggage at transportation facilities or custom inspection areas. These particles, together with solid microscopic particles of the explosives or narcotic material, are collected by sampling the air with an air stream and depositing the collected particles onto a collecting medium which medium is then moved to an inlet of an ion mobility spectrometer. The particles are heated to vaporize materials from the particles which vapours are drawn into the ion mobility spectrometer directly or via a transfer line where the vapours are analyzed.

It is a further object of the invention to provide an improved method of detecting concealed explosive or narcotic substances using an ion mobility analyzer (IMS) in which particles on or adjacent surfaces near areas which may conceal those substances are collected by an inertial separator and concentrated at the base of the inertial separator which deposits the particles onto a collecting medium located on a movable surface, which surface is moveable to place that collecting medium adjacent to an entrance of an IMS analyzer where the particles are heated to vaporize material from the particles, the vaporized material being drawn into the IMS for analysis, wherein the moveable surface contains a number of collecting mediums located so that as one collecting medium is placed adjacent the entrance to the IMS, another collecting medium is placed beneath the base of the inertial separator. The transport of the particles from the collector to the desorber can be by means of a tape transport system operating incremental or a rotatable table.

The present inventor has found that ambient air, suitably treated can be used to entrain the vapours from the substances of interest. This eliminates the necessity for a membrane, or any other elaborate enclosure techniques.

One embodiment of the invention is directed to an improved apparatus for detecting concealed explosive or narcotic substances using an ion mobility spectrometer wherein an inertial separator creates an airstream to collect particles on or adjacent surfaces near areas which may conceal those substances with the particles being concentrated by the inertial separator and deposited onto a collecting medium which is located on a rotary table, the surface of the table being located adjacent a base of the inertial separator and adjacent to an inlet to an ion mobility spectrometer, the location of the collecting medium on the table being such that as the table is rotated the collecting medium can be placed in a first position below the base of the inertial separator and on further rotation can be placed in a second position adjacent said inlet, means at said second position to heat said collecting medium to vaporize material from the particles on the collecting medium into said inlet, wherein said means at said second position includes means to heat said particles to a first temperature to vaporize material having a first low vapour pressure and means to heat said particles to a second higher temperature to vaporize material having a second low vapour pressure.

In a further preferred embodiment, the table is rotatable to place the collecting medium at a third position with a means at said third position to heat said collecting medium to a higher temperature to clean said collecting medium.

In a still further embodiment of the invention of an apparatus for detecting concealed explosives with an ion mobility spectrometer, the apparatus includes a cyclone to sample air around surfaces of a container which might contain concealed explosives to collect particles on or adjacent to the surfaces, the cyclone concentrating the particles at its base which is directly above a rotatable table carrying at least two frits, the table being positioned to place one frit below the base of the cyclone which deposits the particles onto the said one frit, the table being rotatable to place the one frit with the particles on its surface adjacent an inlet of the ion mobility spectrometer and another frit beneath said base with means near said inlet to heat said one frit to a temperature that will vaporize materials from the particles and means to transfer the vaporized material into said inlet, the table then being rotatable to place said one frit at a cleaning location with means at the cleaning location to heat the frit to a higher temperature to clean the frit of said particulates, wherein the means to heat the frit to a temperature to vaporize materials from the particles includes a first means to raise the temperature of the frit to a first temperature which will vaporize materials having a first low vapour pressure and a means to raise the temperature of the frit to a second higher temperature which will vaporize materials having a second low vapour pressure.

In still further embodiments, an incremental tape deck using a semiporous high temperature resistant organically neutral tape medium is used to collect dust particles at the collecting stage and transport the particles to the desorption stage, the tape being moveable in a controlled sequential manner.

It is also possible for other heating means, e.g. a laser, to be employed. In this case, the particles need not necessarily be collected but instead a stream of the particles could be vaporized by the laser, or the laser could be used to vaporize collected particles.

It will also be appreciated that for detecting substances that are vapours, the steps of collecting particles and then heating them to generate a vapour can be omitted. Instead, the vapour could just be entrained into a gas, flowing into the analyzer inlet.

The invention will now be described in more detail with reference to the accompanying drawings, wherein:

Figure 1 shows a typical ion mobility spectrometer (IMS),

Figure 2 shows a top view of an apparatus to collect samples and transport them to an IMS analyzer according to the present invention,

Figure 3 shows a side view of the apparatus shown in Figure 2,

Figure 4 shows a modified IMS detector suitable for carrying out the method according to the present invention,

Figures 5 and 6 shows an inlet to an IMS detector and heater in greater detail,

Figure 7 shows a tape transport system for samples according to the present invention, and

Figure 8 shows another tape transport system for samples wherein the tape, supply reel and take-up reel may be in a disposable cassette.

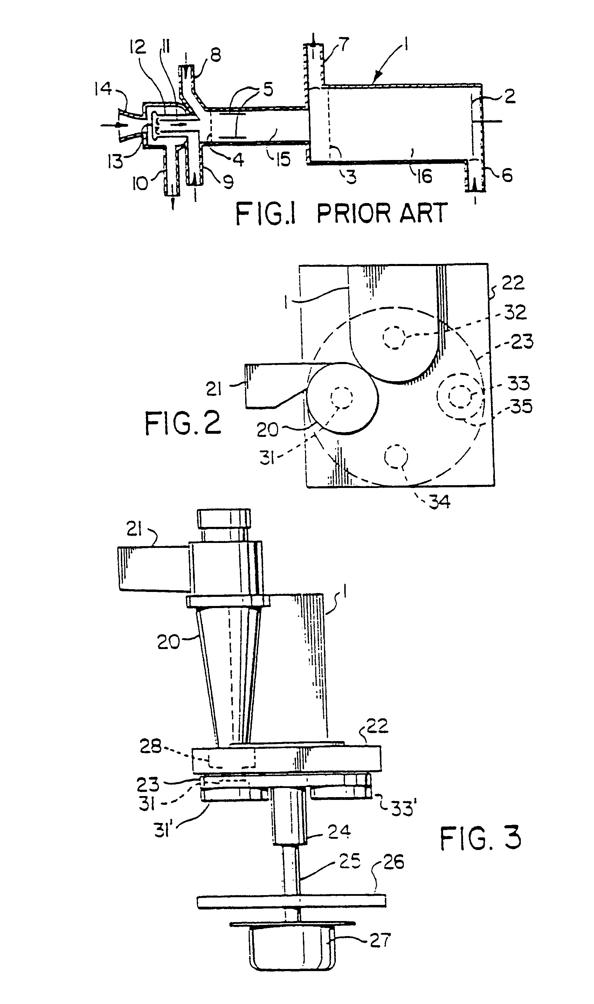

A typical ion mobility detector 1 shown in Figure 1 contains an inlet port 12, a reaction region 15 and an ion drift region 16. An ion injector or shutter grid 3, is located between ionization source 5 in the reaction region 15 and the ion drift region 16. The ionization source 5 may consist of material which provides a source of beta particles such as the radioactive isotope 63 of nickel.

The detector shown in Fig. 1 has a membrane 13 stretched over the entrance to inlet port 12. In operation, a sample pump connected to tube 10 causes a continuous flow of sample gas across the outer surface of membrane 13, the sample gas entering through inlet port 14. A mixture of reagent, and carrier gases flow in tube 9 across the inner surface of membrane 13 and into the reaction ionization region 15 through the entrance 11. The mixture of reagent and carrier gases scrub the internal surface of membrane 13 producing a mixture with molecules which diffuse through the membrane from the sample gas. These gases are ionized in reaction chamber 15 by ionization source 5. A diluent gas, suitable purified air or nitrogen, can be also injected into reaction chamber 15 through tube 8 in order to dilute the concentration of sample molecules in the carrier gas mixture. A standard diffuser 4 may be provided at the entrance to the reaction chamber 15 to provide thorough mixing of the different gases.

A voltage potential gradient is impressed along the length of ion mobility detector from the diffuser grid 4, which can act as a repeller grid, to the collector electrode 2. This causes ionized molecules to accelerate towards the grid 3 with the non-ionized molecules being carried towards grid 3 in the flow of gasses towards vent 7. The non-ionized molecules, which are mostly carrier gas, are swept out of the detector through vent 7. Since this detector operates at or near atmospheric pressure there are many collisions between the gas molecules which tend to create ionized sample molecules and deionize the previously ionized carrier gas molecules in the reaction chamber 15. The ionized molecules can then be deionized, on the side of grid 3 facing the reaction chamber 15, this grid 3 being biased to prevent the passage of ions.

Whether the ions created are positive or negative will depend on the substances being detected and vapours entrained in the reagent and carrier gases. In general, narcotics such as heroin and cocaine will generate positive ions, while explosives will generally create negative ions. The diffuser grid 4 and collector electrode 2 are then biased accordingly to cause the ions to drift towards the electrode 2. To operate the device a short electric pulse is applied to grid 3 to bias the grid so that it allows a bundle of positive or negative ions, whichever are present, to pass into the drift region 16 and be accelerated towards collector electrode 2. The ions in the drift tube fall into discrete times after grid 3 has been pulsed on, with these times being related to the different types of mobility for the ions. From this, the types of ions reaching the collector electrode 2 can be determined. A drift gas injected through tube 6 prevents the formation of new sample ions in the drift region by sweeping non-ionized sample molecules out of the drift region 16 through the vent 7.

The ion mobility detector 1 has been described when a membrane 13 is stretched across the inlet 12.

In accordance with the present invention, this detector is modified by omitting the membrane and by directly injecting a gaseous mixture of carrier gas, reagent and sample gas into the input port 11. A non-membrane system has a number of advantages over a membrane system, such as higher sensitivity and more instantaneous response.

The present invention is based on the principle that trace qantities of vapour can emanate from a concealed source of explosive material which trace quantities can subsequently be adsorbed on the surface of loosely adhering particles of dust on clothing, luggage and other cargo. This is particularly true after the explosive material has been stored for a length of time, providing more time for the vapour to be adsorbed by the particles. Furthermore, due to mechanical abrasion and handling, very small particles of that explosive material may escape from a package or container concealing that material. These small particles may adhere to the outer surfaces of a package and adjacent surfaces or adhere to dust particles on those surfaces. Sampling and preconcentration of these loosely bound surface particulates along with small loose particles of the explosive material and then heating to vaporize material from the particulates or particles provides an easy and reliable method for detecting concealed explosives. The vaporized material can be drawn into an entrance of an IMS analyzer for identification of different types of molecules obtained from the sampled area.

In order to collect the sample particles, a cyclone, for instance, is used to create an airstream and to sample a suitcase, or other article, around the edges of the joints. The collected particles can then be heated to vaporize material from the particles. One type of apparatus, according to the present invention, for sampling and desorption is shown in Figures 2 and 3 where Fig. 2 show a top view and Fig 3 a side view of the apparatus. A cyclone particle collector 20 has an inlet 21 to which an inlet vacuum hose (not shown) may be attached for sampling around joints of suitcases and baggage. The cyclone 20 is attached to a support plate 22 with the bottom of the cyclone extending into opening 28 in plate 22. As in a conventional cyclone particles exit tangentially, the bottom of the cyclone is modified, to redirect the tangential particle flow into a downward axial flow. The collected particles are concentrated at the conical base of the cyclone where they are deposited onto a frit 31 through opening 28. There are 4 frits 31, 32, 33 and 33 located on a rotatable table 23 beneath the top support plate 22. Each frit consists of resistive heating wires covered with a glass fibre filter, the frits having a low thermal mass which is capable of rapid heating and cooling. The frit 31 is located on a base 31' and extends into an opening in the rotary table 23. The other frits 32, 33 (with base 33' shown) and 34 and their bases are identical to 31 and are equally spaced around the rotary table 23 which is supported by a shaft 25 extending through a lower support plate 26.

The table 23 can be rotated by a stepping motor 27 located on the opposite side of the lower support plate 26, the motor being connected to the rotary table via shafts 25 and 24. As the table 23 is rotated through 90° the frit 31 is moved to a location previously occupied by frit 32 which is directly below the entrance to an IMS detector 1.

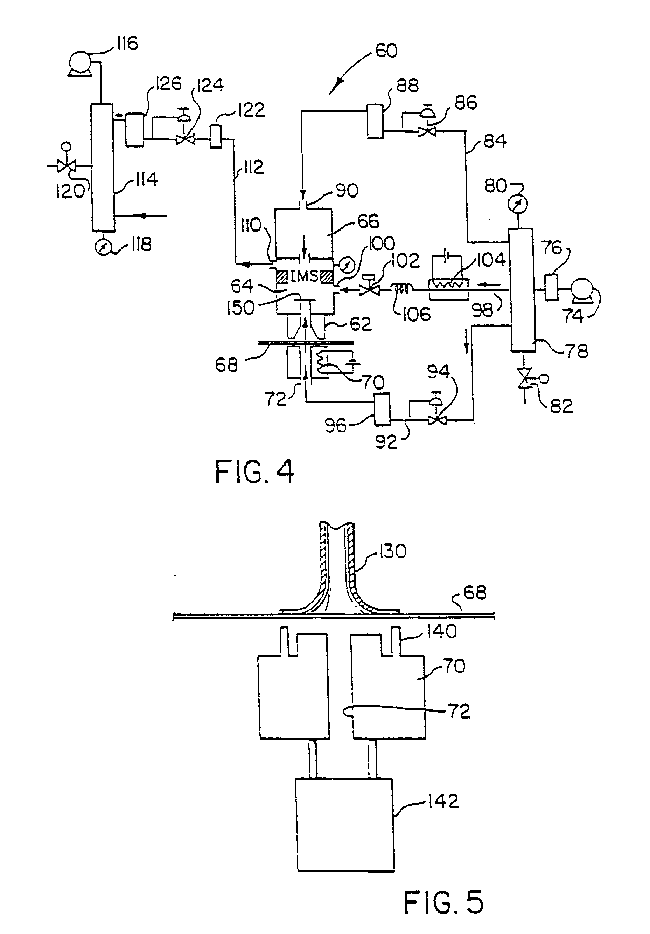

With reference to Figures 4, 5 and 6, a modified IMS detector, suitable for carrying out the method of the present invention. The modified IMS detector is generally indicated by the reference 60. The detector 60 includes a sample inlet 62, described in greater detail below, an ionization chamber 64 above the inlet 62, and a drift tube 66 above this. A collecting medium in the form of a planar collector is indicated schematically at 68; different types of collectors are detailed below. Below the collector 68, there is a heater 70 with a duct 72 for the desorption flow.

A positive pressure pump 74 draws in the ambient atmosphere through a filter 76, which filters out moisture and hydrocarbons, the filtered ambient air being delivered to a first surge tank 78. The surge tank 78 is fitted with a pressure gauge 80 and a first pressure relief valve 82, vented to atmosphere.

The surge tank 78 has a first line 84, which includes a first pressure control valve 86 and a filter 88. The line 84 is connected to a drift gas inlet 90 of the drift tube 66.

A second line 92 is connected between the surge tank 78 and the duct 72. This second line 92 includes a second pressure control valve 94 and a filter 96.

A third line 98 is connected to the surge tank 78 and to an inlet 100 of the ionization chamber 64, for supplying a calibrant or a reagent gas. In the third line 98, there is a control valve 102, a heater 104 and a permeation tube 106 which includes a calibrant or reagent substance, which is heated and released in controlled quantities into the air flow through the line 98. Consequently, the air flow into the ionization chamber 64 through inlet 100 includes a controlled amount of the calibrant substance.

The ionization chamber 64 includes an exhaust or vent outlet 110 that is connected by an exhaust line 112 to an exhaust or second surge tank 114. A subatmospheric pressure is maintained in the surge tank 114 by a suction pump 116. Again, the surge tank 114 is fitted with a pressure gauge 118 and pressure relief valve 120.

A filter 122 is provided for condensing any residue coming from the IMS device. Further, a pressure control valve 124 and additional filter 126 are provided.

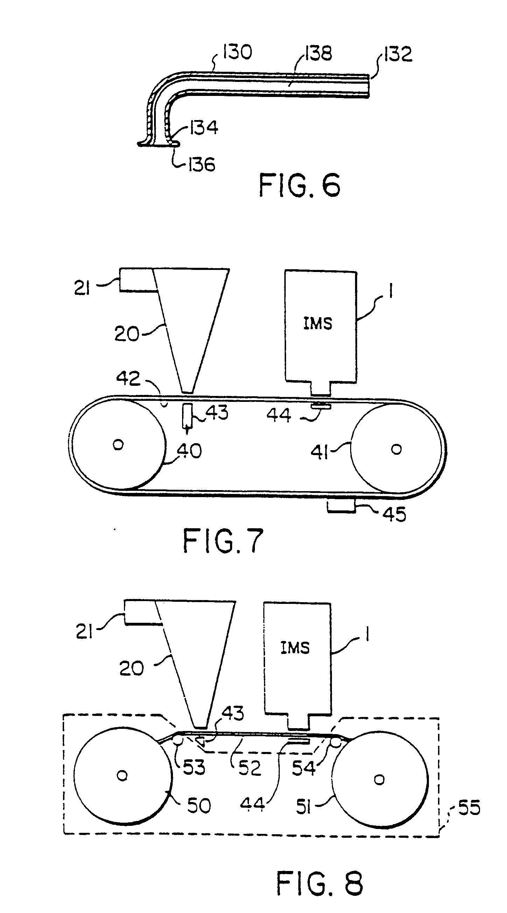

Turning to Figures 5 and 6, these show the inlet 62 and the heater 70 in greater detail. The inlet 62 is formed by a quartz tube 130 having one end 132 for connection to the ionization chamber 64. The other end 134 is flared or belled outwards, and its bottom surface 136 is ground to provide a flat, annular sealing surface. The quartz tube 130 is housed in a steel housing (not shown) with a heater, for maintaining the inlet conduit 138 in the quartz tube at a desired temperature.

The heater 70 is provided with an annular stainless steel sealing member 140. Additionally, as indicated schematically at 142 a solenoid actuator or the like is provided for displacing the heater 70 and duct 72 vertically.

When the glass fibre filter of frit 31 becomes located beneath the inlet of IMS detector 60, the solenoid 142 is actuated to press the sealing member 140 against the frit 31, which in turn is pressed against the sealing surface 136, to seal the duct 72 to the inlet conduit 138. The heater 70 is then heated by resistive heating wires, using a two-stage heating cycle, to provide a rapid 2-stage dispersion cycle. The two-stage temperature cycle first heats the glass fibre filter to about 110°C for dispersion of any EGDN from the particles and then raises the temperature to about 200°C for dispersion of any DNT or other types of explosives. Thermal dispersion studies indicate that molecules of almost all types of explosives can be thermally desorbed from the particles. However, in selecting the optimum temperature it is found that some explosives such as EGDN are thermally liable and have molecules that decompose at higher temperature. Other explosives such as DNT and TNT, require high temperature for thermal desorption from particles. For these reasons, a two-stage temperature cycle is used with a temperature of 110°C for desorption of EGDN and of 200°C for other explosive compounds. U.S. Patent 4,718,268 provides a list of approximate optimum desorption temperature for some of the more common drugs and explosive compounds, and the contents of this patent are hereby incorporated by reference. The desorbed vapour from the particles are drawn into the IMS tube for analysis. It will be appreciated that, for detection of a particular substance, or range of substances, it may be necessary to only heat to a single desorption temperature.

Simultaneously, the IMS detector 60 is operated. Thus a flow of desorption gas flows through the second line 92 and duct 72, and then through the sealed frit 31 into the inlet conduit 138. The inlet conduit 138 is heated, to maintain it at a desired temperature. The gas with vapour entrained therein then passes into the ionization chamber 64, wherein the vapour is ionized in the known manner and passes through into the drift tube 66. Drift gases simultaneously supplied through the first line 84 into the drift tube 66, so that the ion mobility spectrum can be made.

The ionization and drift chambers 64, 66 are also heated, to desired temperatures, as discussed below. This introduces a number of variables into the operation of the IMS detector 60. The various variables are compensated for, by the provision of the third line 98.

Prior to injection of gas bearing vapour from substances of interest a calibrant gas, preferably one having comparable and known properties to that to be detected, is injected through the line 98. Measurements are then taken, to calibrate the IMS detector 60. Alternatively or as well, for detection of certain substances, a reagent gas can be injected through inlet 100.

While the IMS device 60 is being operated, in known manner, the suction pump 116 and line 112 maintain the necessary subatmospheric pressure and the exhaust 110.

In contrast with conventional IMS detectors, there is no membrane present and hence there is no physical barrier preventing particles entering into the IMS detector 60. The present invention provides a variety of means to prevent such particle entry, since particles entering into it would likely cause discharge, arcing and generally unreliable operation. First, the manner in which the particles are collected on the frit 31 is such as to embed them into the semi-porous material of the frit 31. To further increase the embedding of the particles, a suction device can be provided beneath the cyclone 20. With the particles well embedded in the frit 31, the possibility of particles becoming free is greatly reduced, and, upon heating, only vapour should be generated.

In the event that any particles do separate from the frit 31 and become entrained into the flow to the IMS detector 60, the quartz tube 130 is given an L shape, so that particles will tend to be thrown to the outside of the angle of the L and adhere to the walls thereof. If it is found that there is a considerable problem with particle entrainment in the gas flow, then a plug can be provided in the tube 130, which does not affect molecular flow therethrough, but which serves to catch particles in a similar manner.

Further, as indicated schematically at 150 in Figure 4, a dense mesh is provided at the inlet of the ionization chamber 64. This mesh typically has a six micron opening and could comprise gold plated nickel. This serves three separate functions. It catches and stops any particles entrained in the gas flow, it disperses the flow, to give even flow into the ionization chamber 64, and it prevents reverse ion flow out of the ionization chamber 64.

In use, it has been found essential to maintain the IMS detector 60 very clean. Thus, after a period of use, the quartz tube 130 would be replaced with a clean tube, and the inlet mesh 150 should similarly be replaced at regular intervals.

The choice of the materials for the mesh are important, since many metals will cause decomposition of many organic substances.

Further, a selection of the materials for the frit 31 or other collection medium is important. The frit 31 are formed of glass fibre. As detailed below for an alternative tape system, a ten thousandth of an inch thick teflon tape can be used. The tape would be formed from woven or mesh-like teflon.

The temperatures of the heater 70 and hence for the desorption, the inlet tube 130 and the detector 60 are maintained separately. For example, it has been found, for explosives, that the following temperatures give a richer spectrum, namely heater 70 at 180°C, tube 130 at 175°C, and detector 60 at 100°C.

After thermal desorption, the table 23 is again rotated 90° to place frit 31 to the location indicated by 35, where frit 33 was originally located. At this location, the temperature of the glass filter in the frit is raised to 400°C to provide a high temperature cleaning cycle after which the table is again rotated 90° more to place that frit at a location where it is allowed to cool. Since the frits have a low thermal mass, the heating and cooling can occur at a very rapid rate. The location of the cooling stage was originally occupied by frit 34 as shown in Fig. 2. In this manner the 4 frits 31 to 34 can be placed in any of the four positions by the table which can be rotated from position to position by stepping motor 27. In a first position, particles from an air stream created by the cyclone are concentrated at its base and deposited onto a frit, at the second position materials from the particles are vaporized and the vapours are drawn into the inlet of an IMS tube, at the third position the filter on the frit is cleaned by heating to 400°C and at the fourth position is allowed to cool.

As mentioned above, a drift tube heater and a separate inlet heater are also provided in order to keep these at temperatures where materials do not deposit on their walls and to improve detection. These heaters can be adjusted between ambient up to 250°C and placed at a setting for optimum performance. In one model, an operating temperature of 170°C resulted in drift times under 20 ms but a temperature of 120°C had adverse effects on the DNT sensitivity and clear-out times.

Another type of apparatus for collecting samples and transporting them to an ion mobility spectrometer is shown in Fig. 7. In this apparatus, particles are deposited on a tape 42 by a cyclone 20. The tape 42 is inert and resistant to high temperature and may be formed of, for instance, glass fibres supported on a wire mesh or, alternatively, of teflon with a thickness of tenthousandths of an inch. In this case, the tape is semiporous and the collected particles at the base of cyclone 20 can be drawn onto the surface of the tape by suction device 43 located on the opposite side of the tape from the base of the cyclone. Tape 42 is in the form of an endless loop or belt which moves over two rollers 40 and 41 with cyclone 20 and suction device 43 being located near roller 40. An ion mobility spectrometer 60 is located above the tape 42 near the other roller 41 with a heater 44 located below tape 42 and adjacent the inlet of IMS 1. The heater 44 can take various forms such as an induction heater when tape 42 is formed of glass fibres on a conductive wire mesh support or it could be similar to the heater 70 described for the previous embodiment. The heater 44 is designed to provide a rapid 2-stage desorption cycle wherein the tape with the sample is first heated to about 110° for desorption of materials such as EGDN and then heated to about 200°C for desorption of materials such as DNT. Alternatively, a single stage, single temperature cycle could be used. Vapours released by the heating cycle are drawn into the inlet of IMS 1 for analysis.

In operation, a sample is first deposited on tape 42 by cyclone 20 and the tape is incremented forward to place the collected sample adjacent to heater 44. At the same time, a clean section of tape 42 is placed below cyclone 20 where a further sample can be collected at the same time as the first sample is being analyzed. To clean the tape of residue left from the sample, a heater 45 is located at a position after the tape with the residue has passed over roller 41. Heater 45, heats the tape to about 400°C to clean the tape of any residue left from the sample.

Fig. 8 illustrates another type of apparatus for collecting samples onto the surface of a tape 52. In this apparatus, tape 52 on a supply reel 50 passes over pins 53 and 54 to a take-up reel 51. Pins 53 and 54 position the tape at a fixed distance from sample collection cyclone 20 and ion mobility spectrometer 1. The tape, supply reel, tape-up reel and pins 53 and 54 may all be located in a disposable cassette 55 which is shown in dotted lines.

These detectors are under the control of a microprocessor with a large number of parameters being adjustable through a password protected set of menus. An operator can enter a password and the display changes to a control menu when the correct password is entered. This menu allows the operator to control the heater set points, the shutter grid pulse width, the cycle time of the IMS, the number of IMS scans summed for each spectrum and averaged and to enter the peak identification control menus. The microprocessor can store detected mobility spectrums for reference and includes means to compare detected signals against previously stored mobility spectrum of narcotics and explosive substances or other background signals.

Various modifications may be made to the preferred embodiments without departing from the spirit and scope of the invention as defined in the appended claims. For instance, various systems other than cyclones or inertial separators may be used to collect particles from the surfaces.

## Claims

1. A method of detecting substances, the method comprising the steps of:

(a) collecting particles by gas flow from an area that may contain said substances;

(b) depositing the collected particles at a collection location on a collecting medium, and then placing the collection medium at an inlet to an IMS analyzer;

(c) heating the collecting medium and particles adjacent the IMS analyzer inlet, to vaporize material from the particles;

(d) entraining the vaporized material in a flow of gas and passing that flow of the gas into the ionization region of an IMS analyzer, thereby to analyze the vaporized material, to determine the composition of said substances, whilst preventing passage of any discrete particles into the IMS analyzer.

2. A method as claimed in claim 1, wherein the gas used to entrain the vaporized material in step (d) is ambient air, which is filtered prior to entraining the vaporized material.

3. A method as claimed in claim 2, wherein the filtered air supply is also connected to an inlet of a drift region of the IMS analyzer, to provide a drift gas flow, and to an inlet of the ionization region of the IMS analyzer through a device for introducing a calibrant gas, whereby the IMS analyzer can be calibrated by the calibrant gas, to allow for variations in operating parameters thereof.

4. A method as claimed in any preceding claim, wherein the inlet of the analyzer comprises an elongate tube which includes an angle which is such as to cause particles entrained in the inlet gas flow to impinge on the walls of the tube and thereby prevent their passage into the ionization region, and wherein, between the inlet of the analyzer and the ionization region, there is provided a fine mesh which prevents passage of particles into the ionization region.

5. A method as claimed in any preceding claim, wherein the analyzer inlet includes a plug body, which permits molecular flow around the plug body, but which causes particles to impinge thereon, to prevent passage of the particles into the ionization region.

6. A method as claimed in any preceding claim, wherein during steps (c) and (d), the temperature to which the collecting medium is subjected, the temperature of the analyzer inlet and the temperature of the interior of the IMS analyzer are maintained and controlled at separate temperatures.

7. A method as claimed in claim 6, wherein, when the method is applied to the detection of narcotics, step (a) comprises collecting particles from around objects suspected of containing narcotics, and during steps (c) and (d) the collecting medium is heated to a temperature of approximately 300°C, the analyzer inlet is maintained at a temperature of 300°C, and the drift and ionization regions of the analyzer are maintained at a temperature of 280°C, and wherein when the method is applied to the detection of explosives, during step (a) particles are collected from around objects suspected of containing explosives, and during steps (c) and (d) the collecting medium is heated to a temperature of approximately 180°C, the analyzer inlet is maintained at a temperature of approximately 175°C and the drift and ionization regions of the IMS analyzer are maintained at a temperature of approximately 100°C

8. A method as claimed in any of claims 1 to 7, wherein during step (c), the collection medium is heated to a temperature in the range 100 - 450°C, and wherein during steps (c) and (d) the inlet of the IMS analyzer is maintained at a temperature in the range 100 - 450°C, and the drift and ionization regions of the IMS analyzer are maintained at a temperature in the range 100 - 300°C.

9. A method as claimed in any preceding claim, wherein, in step (b), the collecting medium comprises a semiporous filter medium in which the particles are embedded, to prevent any substantial entrainment of the particles in the gas flow in step (d).

10. A method as claimed in claim 9, wherein during step (a) the particles are collected by an inertia collector.

11. A method as claimed in claim 9 or 10, wherein during step (a), suction is provided underneath the collecting medium, to draw and embed particles into the filter.

12. A method as claimed in claim 9, 10 or 11 wherein steps (a) and (b) are carried out using discrete, individual collecting mediums each comprising a semiporous filter, and wherein after collection of the particles, the collecting medium is mounted at the inlet of a separate, IMS analyzer.

13. A method as claimed in claim 9, 10 or 11, wherein the collecting medium is provided on a moveable surface which comprises a plurality of collecting mediums, wherein step (a) is effected at a first collection location, and after completion of step (a), the moveable surface is moved, to a move the collection medium containing particles to a second, vaporization location adjacent the IMS analyzer inlet whilst simultaneously moving a second collection medium to the collection location for collecting another sample of particles.

14. A method as claimed in claim 13, wherein the collection location and the vaporization location are provided on the same side of the movable surface.

15. A method as claimed in claim 13 or 14, wherein following step (d), an additional step is effected, in which the collecting medium at the vaporization location is moved to a third location at which the collecting medium is heated to higher temperature to clean that collecting medium of residue, from the collected particles.

16. A method as claimed in claim 15, wherein following step (e), an additional step (f) is effected in which the collecting medium is moved from the third location to the fourth location at which the collecting medium is allowed to cool, prior to returning to the first collection location for commencement of the cycle again.

17. A method as claimed in claim 13, 14, 15 or 16, wherein the movable surface comprises one of an elongate tape and a rotatable table.

18. A method as claimed in claim 3, wherein the calibrant gas is one of nicotine amide, a chlorinated hydrocarbon and dichloromethane.

19. A method as claimed in claim 3, wherein the calibrant gas is selected to enhance ion molecule reaction chemistry to increase efficiency in producing the required ion.

20. A method as claimed in any preceding claim, wherein the analyzer includes an exhaust outlet and a device for creating subatmospheric pressure is connected to the exhaust outlet, and wherein the flow of gases to the analyzer inlet, the ionization region inlet, the drift gas inlet and the exhaust are all independently controlled by mass flow controllers.

21. A method as claimed in claim 9, wherein during step (c) the collecting medium is subjected to ramp heating, with successively increasing temperature, to cause vaporization of components with successively higher vaporization temperatures.

22. A method as claimed in any preceding claim, wherein during step (d) the multiplicity of peaks are compared to stored reference values, as an aid in component and substance identification.

23. An apparatus for detecting substances, the apparatus comprising: a membrane-less IMS analyzer having an inlet, an ionization region and a drift region; means for heating the particles at a vaporization location adjacent the IMS analyzer inlet to vaporize material from particles thereon; and means for supplying a gas flow through the IMS analyzer to entrain the vaporized material therein whereby the vaporized material passes into the analyzer; and a means for preventing particles at the IMS analyzer inlet from passing into the ionization region of the IMS analyzer.

24. An apparatus as claimed in claim 23, which includes an air supply connected to the analyzer input, the air supply serving as the gas flow for entraining the vaporized material, and means for filtering air delivered to the air supply.

25. An apparatus as claimed in claim 24, which includes a second line connecting the air supply to a drift gas inlet of the IMS analyzer for supplying air as a drift gas, and a third line including means for delivering a reactant or calibrant gas, which third line is connected to a third inlet of the ionization chamber for delivering a reactant or calibrant gas.

26. An apparatus as claimed in claims 23, 24, or 25, wherein the IMS analyzer inlet comprises a tube which extends through an angle, causing particles entrained in the gas flow to impact on the side wall of the tube.

27. An apparatus as claimed in claim 23, 24, 25 or 26, which includes a means for collecting particles on a collecting medium comprising a semiporous filter material, in which particles are embedded, wherein the means for heating the particles heats particles embedded in the collecting medium and wherein the IMS analyzer includes a fine mesh between the analyzer input and the ionization region thereof, for preventing passage of particles into the ionization chamber.

28. An apparatus as claimed in claim 27, wherein the collecting medium comprises a semiporous filter material, in which particles are embedded.

29. An apparatus as claimed in any one of claims 23 - 28, wherein the analyzer inlet includes a plug body, which permits molecular flow there-around, but which causes particles entrained in the inlet gas flow to impact the plug body, to prevent their entry into the analyzer ionization chamber.

30. An analyzer as claimed in any one of claims 23 - 29, which includes a vaporization heater for heating a collecting medium adjacent the analyzer input, and separate heaters for each of the analyzer input and the drift and ionization regions of the IMS analyzer, and for each heater, an individual control, so that each heater may be set at a different temperature.

31. An apparatus as claimed in claims 27 or 28, wherein the collecting means and the IMS analyzer are mounted side by side, for use with a movable surface providing a series of spaced apart collecting mediums, whereby when one collecting medium is located at a collection location at the collecting means, another collecting medium is located a vaporization location at the analyzer inlet, and the movable surface can be displaced to move the collecting medium at the collection location to the vaporization location, the inlet being capable of forming a seal around the collecting medium to prevent entrainment of ambient air.

32. An apparatus as claimed in claim 31, which includes a third location, including a heater for heating a collecting medium to a higher temperature to clean any residue from the previously collected particles, and a fourth location between the third location and the collection location, at which a collection medium can cool, prior to returning to the collection location, and wherein the collecting mediums on the rotatable table comprise individual frits, each of which comprises glass fibre located on resistive wires.

FIG.1 PRIOR ART

FIG.2

FIG. 3

FIG. 4

FIG. 5

FIG. 6

FIG. 7

FIG. 8

14